(19) Europäisches Patentamt
European Patent Office
Office européen des brevets

(11) **EP 2 509 328 B1**

(12) **EUROPEAN PATENT SPECIFICATION**

(45) Date of publication and mention
of the grant of the patent:
**26.01.2022  Bulletin 2022/04**

(21) Application number: **12162521.4**

(22) Date of filing: **30.03.2012**

(51) International Patent Classification (IPC):
***H04N 13/00*** *(2018.01)*

(52) Cooperative Patent Classification (CPC):
**H04N 13/261**

(54) **Method and apparatus for generating a 3d image from a 2d image**

Verfahren und Vorrichtung zur Erzeugung eines 3D-Bildes aus einem 2D-Bild

Procédé et appareil pour générer une image 3D à partir d'une image 2D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2011  TR 201103444**

(43) Date of publication of application:
**10.10.2012  Bulletin 2012/41**

(73) Proprietor: **Vestel Elektronik Sanayi ve Ticaret A.S.
45030 Manisa (TR)**

(72) Inventors:
• **Bastug, Ahmet
 45030 Manisa (TR)**
• **Ozdemir, Huseyin
 45030 Manisa (TR)**
• **Ozer, Nuri
 45030 Manisa (TR)**

(74) Representative: **Beck Greener LLP
Fulwood House
12 Fulwood Place
London WC1V 6HR (GB)**

(56) References cited:
EP-A2- 2 306 744    US-A1- 2008 192 067
US-A1- 2009 195 643   US-B1- 6 314 211
US-B1- 6 590 573

• **Anonymous: "Defining Image Resolution And
Image Dimensions", , 1 January 2007
(2007-01-01), XP055170558, Retrieved from the
Internet:
URL:http://blog.phpkemist.com/2007/08/05/d
efining-image-resolution-and-image-dimensi
ons/ [retrieved on 2015-02-18]**
• **Tinku Acharya ET AL: "Computational
Foundations of Image Interpolation Algorithms",
ACM Ubiquity, Volume 8, Issue 42, 29 October
2007 (2007-10-29), XP055170597, Retrieved from
the Internet:
URL:http://dl.acm.org/citation.cfm?id=1317 488
[retrieved on 2015-02-18]**
• **VAZQUEZ CARLOS ET AL: "Stereoscopic
imaging: filling disoccluded areas in depth
image-based rendering", PROCEEDINGS OF
SPIE, IEEE, US, vol. 6392, 17 October 2006
(2006-10-17), pages 1-12, XP002444224, DOI:
10.1117/12.685047 ISBN: 978-1-62841-730-2**

**EP 2 509 328 B1**

**Description**

The present invention relates to a method and apparatus for generating a 3D image from a 2D image. In embodiments, the invention relates to method of generating sequences of 3D images from a corresponding sequence of 2D images. In other words, the method in embodiments is for generating 3D video from 2D video.

Generally, a method is provided for producing three dimensional (referred to as 3D from this point forward) video from two dimensional (referred to as 2D from this point forward) video captured using a single camera. Separate 2D frames are created for each of the left and right eyes of a viewer for one 2D input frame. These separate 2D frames are displayed on a 3D display alternately one after another in a time sharing fashion. An observer wears shutter or polarized glasses depending on the system. When the left eye frame is displayed on the display, the lens in front of the right eye blocks the vision and vice versa. In this manner, different views of the scene are fed to left and right eyes separately. Finally, the human visual system fuses the data coming from both eyes, and the viewer can observe the depth of field on the display.

In international patent application no WO-A-90/13848, a system is described for converting 2D video to 3D video. This is achieved by processing each frame from the 2D video so as to apply a horizontal shift between images that will subsequently be presented to the left eye and right eye of a viewer. Left and right eye frames are generated by sub-sampling the original 2D input frame by 2 in the horizontal direction. A "side-by-side" packed frame is generated that has the same resolution as the original 2D input frame. Finally, the horizontal shift is applied to both left and right eye images to create 3D Output frame, i.e. a frame from a sequence of similarly processed frames of video that when viewed by a user will appear as 3D video.

Figure 1 shows schematically how the process of WO-A-90/13848 operates. Initially, a 2D input frame 2 is received. This is sub-sampled to generate two intermediate frames 4 of the same height but half the width. A combined frame 6 is then created including both the intermediate frames 4. The combined frame 6 has the same width and height as the original frame 2. Next a shift is applied to each of the constituent parts of the combined frame 6 so as to generate a 3D output frame 8.

Although the system of WO-A-90/13848 can work well, a problem that arises is the presence of black strips, i. e. pixel gaps, at the vertical sides of the left and right eye frames due to the shifting operations. The width of the strips increases as the shift amount increases. The precise positioning of the strips clearly depends on the direction of the shift.

WO-A-98/29860 discloses systems and methods for synthesizing a 3D video stream from a 2D video source. A frame from the two-dimensional video source is digitized and then split into a plurality of fields, each containing a portion of the information in the frame. The fields are then separately processed and transformed to introduce what are described as "visual clues" that, when assembled with the other fields, will be interpreted by a viewer as a 3D image. The transformations include skewing transformations, shifting transformations, and scaling transformations.

The transformations may be performed in the horizontal dimension, the vertical dimension, or a combination of both. After the 3D video stream has been synthesized, it is displayed on an appropriate display device, which might include a multiplexed display device which alternates the viewing of different fields in conjunction with a pair of shuttered glasses. The glasses allow one field to be displayed to one eye of viewer and another field to be displayed to another eye of a viewer.

There are a number of known methods by which 3D images or video can be generated from a 2D film or image. US-A-5,739,844 discloses a method by which 3D image data is generated from a 2D film. The method works by taking into account motion parameters associated with objects in the frame in question and then determining a shift for one of the two stereo images in dependence on the motion parameter.

US-A-5,682,437 relates to a modification on the method of US-A-5,739,844 discussed above. It identifies a problem that occurs using the method of US-A-5,739,844 when the movement of objects within an input image is at variable speeds such that in some cases an insufficient delay is used in generating a second image for use in producing a 3D output. Means by which the delay may be varied so as to avoid this effect occurring are disclosed.

Next, US-A-2010/0021141 discloses a method for generating stereoscopic images starting from a 2D video and then creating a number of layers so as to enable the generation of 3D video. In particular, the system relates to a method by which subtitle data may be presented in a 3D manner corresponding to 3D video and so as to avoid the effect of "flat graphics" which appear "to be buried" in stereoscopic video, thus causing displeasure to viewers.

US-A-6,031,564 discloses a means by which 3D stereoscopic images may be generated from a monoscopic image. Two perspectives are used, the second perspective being generated by "image warping". This is done primarily by identifying objects and their outline shapes, and in the transformation of the outline shapes into new shapes. US-A-6,314,211 discloses apparatus and method for converting a 2D image sequence into a 3D image sequence using a conversion of a motion disparity into a horizontal disparity and subsequent post-processing method.

US-A-5,796,373 relates to an apparatus and method of using 2D image data for providing view-visual depth, and in particular to the use of a personal computer to provide a stereoscopic display by means of a "shutter-type stereoscopic eye-glasses". Last, US-A-7,064,895 relates to a method by which a stereoscopic image may be observed by a viewer without use of special glasses.

EP 2,306,744 discloses methods for converting a 2D multimedia image to a 3D multimedia image by utilising a plurality of layers of the 2D image. The layers can be processed to give rise to left eye and right eye versions that include pixel offsets corresponding to the desired 3D effect for each layer.

The internet page entitled "Defining Image Resolution and Image Dimensions" (URL: http://blog.phpkemist. com/2007/08/05/defining-image-resolution-and-image-dimensions/), as cited in the European search report, provides background information on image interpolation and extrapolation.

US6590573 discloses an illustrator- or painter-operated, computer-mediated system for creating binocular, stereoscopic images from 2-D and 3-D image elements created by the operator or imported into the system.

According to an aspect of the present invention, there is provided a method of generating a 3D image from an input 2D image as set out in the first of the appending independent claims. According to another aspect of the present invention, there is provided an apparatus for generating a 3D image from an input 2D image as set out in the second of the appending independent claims. Features of preferred embodiments are set out in the appending dependent claims.

There is also disclosed herein examples of a method of generating a 3D image from an input 2D image by generating at least one shifted 2D image for presentation to a user in combination with the input 2D image or another shifted image derived from the input 2D image, the method comprising: receiving an input 2D image; for a first row of pixels in the input 2D image, from some selected point along the row mapping all pixels a common number of pixel locations to the left or right thereby shifting the image and forming a shifted image; mapping pixels in locations in the input 2D image before the predetermined point, a variable number of pixel locations to the left or right to positions in the shifted image; and repeating for other rows in the input 2D image.

A method is provided by which 3D images can easily and efficiently be generated based on input 2D images. Consequently a method is also provided for generating 3D video based on input 2D video, 2D video being effectively made up of a sequence of 2D images. The method includes the steps of, for a row of pixels in the input image determining a point along the row that depends on the amount of "shift" required. All pixels beyond this point are mapped by a common amount to positions in a row in a shifted image. For pixels before this point in the input row, the mapping is not uniform but rather varies. This enables a smooth mapping to be achieved and also avoids the problem of black strips appearing at the side of an image as encountered using conventional methods of generating 3D images from 2D input images.

Preferably, the same transformation is performed on all rows of a 2D input image such that the image as a whole is "shifted".

Preferably, the variable mapping is determined in dependence on a linear relationship between original position and mapped position. This ensures a smooth filling of the region that would conventionally have been a black strip.

Preferably, the linear relationship has a constant of proportionality dependent on original pixel position. In other words, the further along a row a pixel's position in the input image, the further along it will be positioned in the shifted or output image. This means that the strip that would conventionally have been black is faithfully filled with the original image data so that the "stretching" of the input image at this point is unlikely to be noticed by a user or viewer. This is particularly the case since the viewer's attention will be on the main body of image where the 3D effect will be generated.

Preferably, the linear mapping is performed in accordance with some defined algorithm.

In one example, the following can be used:

$P_{in}(i)$ denotes a pixel at position i of the input row
$P_{out}(i)$ denotes a pixel at position i of the output row

and the shift amount, i.e. pixel correspondence, is defined as $x = i\dfrac{n}{\alpha + n}$ if x is an integer number, then

$$P_{out}(i) = P_{in}(x).$$

Preferably, if x is not integer, then the following relationship is used to determine the pixel value within the output row $P_{out}(i)$

$$P_{out}(i) = d_2 . P_{in}(\lfloor x \rfloor) + d_1 . P_{in}(\lceil x \rceil)$$

in which

$\lfloor x \rfloor$:    greatest integer that is smaller than or equal to x;

$\lceil x \rceil$ : smallest integer that is greater than or equal to x; and,

$$d_1 = x - \lfloor x \rfloor$$

and

$$d_2 = \lceil x \rceil - x .$$

In one example, the input 2D image has a width of w pixels and the selected point is defined as n in which n <w, the shift amount being a, such that all pixels in the input 2D image with a position greater than or equal to n are shifted to a new position n + α in the shifted image.

In one example, pixels in the shifted image having a position less than n + α are assigned values in dependence on the pixel values in the input 2D image of the pixels having position being less than n.

In one example, for pixel positions in the output row for which there is not a direct mapping from a single pixel in the input row, the pixel value is determined on a weighted average.

In one example, upon receipt of the input 2D image, down-sampling is performed to generate two images for processing. Preferably, the down-sampling comprises lowpass filtering and then sub-sampling. Each of the down-sampled images is shifted by an amount, so that the two shifted images can be presented to a user.

In one example, the method comprises presenting to a user the shifted 2D image in combination with the input 2D image or another shifted image derived from the input 2D image, to thereby generate a 3D image.

There is also disclosed herein examples of a method of generating 3D video from 2D video, comprising for each frame of an input 2D video, generating a 3D image in accordance with the first aspect of the present invention. In other words, whereas the first aspect of the present invention relates generally to generating a 3D image from a 2D image, the second aspect includes the method of the first aspect but relates to its use in generating a 3D video from a 2D video which may be thought of as generating a sequence of 3D images from a sequence of input 2D images.

There is also disclosed herein examples of an apparatus for generating a 3D image from an input 2D image by generating at least one shifted 2D image for presentation to a user in combination with the input 2D image or another shifted image derived from the input 2D image, the apparatus comprising a processor arranged to receive an input 2D image and for a first row of pixels in the input 2D image, from some selected point along the row to map all pixels a common number of pixel locations to the left or right thereby shifting the image and forming a shifted image and being further arranged to map pixels in locations in the input 2D image before the predetermined point, a variable number of pixel locations to the left or right to positions in the shifted image.

Apparatus is provided which serves to easily and efficiently generate 3D images based on input 2D images. Consequently apparatus is also provided for generating 3D video based on input 2D video, 2D video being effectively made up of a sequence of 2D images. As will be explained below, the apparatus can form part of a television system or perhaps part of a set top box or TV peripheral which receives a 2D video signal and then provides this to a television for display.

Preferably, the apparatus comprises a memory for storing the 2D input image prior to processing. Preferably, the memory is arranged to store the generated 3D image prior to presentation to a user. Preferably, the apparatus is arranged to receive an input 2D video made up of frames each being an input 2D image and to generate a 3D video by generating a 3D image for each of the received frames.

There is also disclosed herein examples of a television set including a display for displaying video and apparatus for generating a 3D video according to the second aspect of the present invention.

There is also disclosed herein examples of a method of generating a 3D image from an original 2D image by generating at least one shifted image for presentation to a user in combination with the original 2D image or another shifted image derived from the original 2D image, so as to generate a 3D effect, the method comprising: receiving an original 2D image; for a first row of pixels in the original 2D image, at some predetermined point along the row shifting all pixels a common number of pixel locations to the left or right thereby shifting the image; for pixels in locations before the predetermined point, interpolating values for corresponding positions in the shifted image.

Embodiments of the present invention will now be described in detail with reference to the accompanying drawings, in which:

Figure 1 shows a schematic representation of a method of generating 3D video from 2D video as used in WO-A-90/13848;
Figure 2 is a schematic representation of a method of generating 3D video from 2D video;
Figure 3 shows an example of pixel transforms in a row of video as used in a method of generating 3D video from 2D video;

Figure 4 is a schematic representation of a method of generating 3D video from 2D video; and,

Figure 5 is a schematic representation of a television system connected to a system for generating 3D video from 2D video.

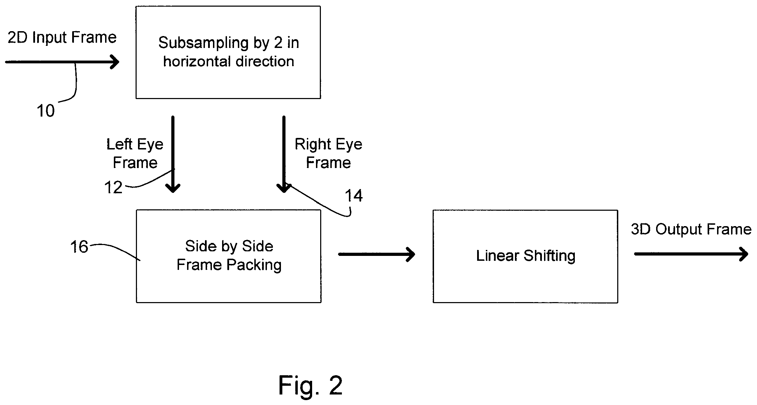

An example of the present method will now be described with reference to Figure 2. Initially, a 2D image or video frame 10 is received. Then, left and right eye images 12 and 14 are generated by down-sampling in the horizontal direction. The down-sampling may be performed in any desired manner. Typically, the input frame is first passed through a low pass (antialiasing) filtering and then subsampled. In other words, there is no aliasing and every pixel, after this stage, has some component from more than one pixel of the raw input image, i.e. the received 2D image or video frame.

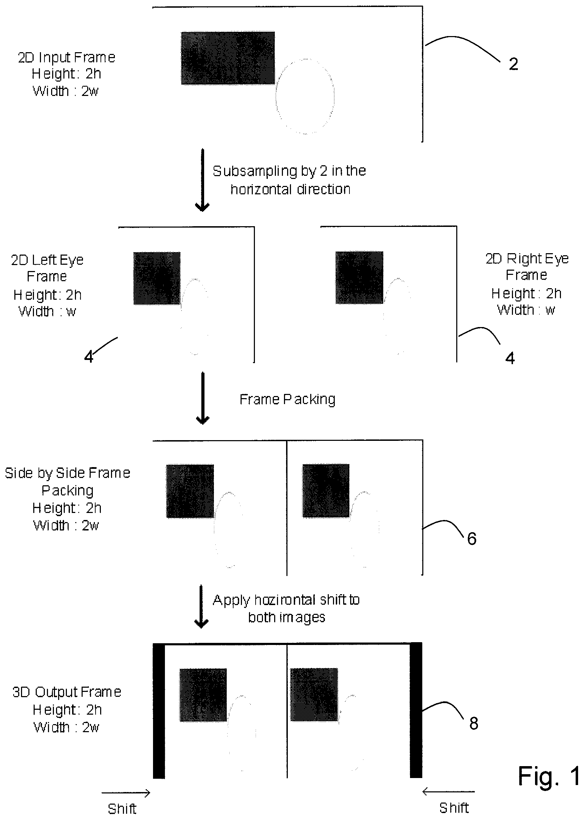

A packed frame 16 is created in a manner similar to that described above with reference to step 6 of Figure 1. In this example, the left and right frames may be presented in a side-by-side manner. However, it will be appreciated that any suitable "packing method" may be used. In one example, the "left" and "right" frames are packed one above the other, i.e. vertically side-by-side instead of horizontally. The specific method of packing used in each case depends on the expected input format in the eventual 3D display.

The method of down-sampling is also changed in dependence on the packing method used. For example, if the frames are packed one above the other then instead of horizontal down-sampling, vertical down-sampling could be used. Another packing method that may be used is a line interleaving method which is mostly used with pattern retarder type polarized panels. A fourth method that may be used is no-packing and no-down-sampling. This may be used if the display panel can support twice frame rate driving. Irrespective of the packing method used, two frames are eventually sent or presented to a viewer's left and right eyes after being unpacked and hence the present method is applicable to all in the same way. Therefore, for the purpose of the present description it will suffice to consider only the side-by-side packing, as a non-limiting example, from this point on.

Once the side-by-side frame has been produced the problem of the black or vacant strips at the sides is addressed. This is done with the use of a method referred to herein as "linear shift" and serves to prevent black strips at the vertical (or horizontal depending on packing mode) sides of the left and right eye frames.

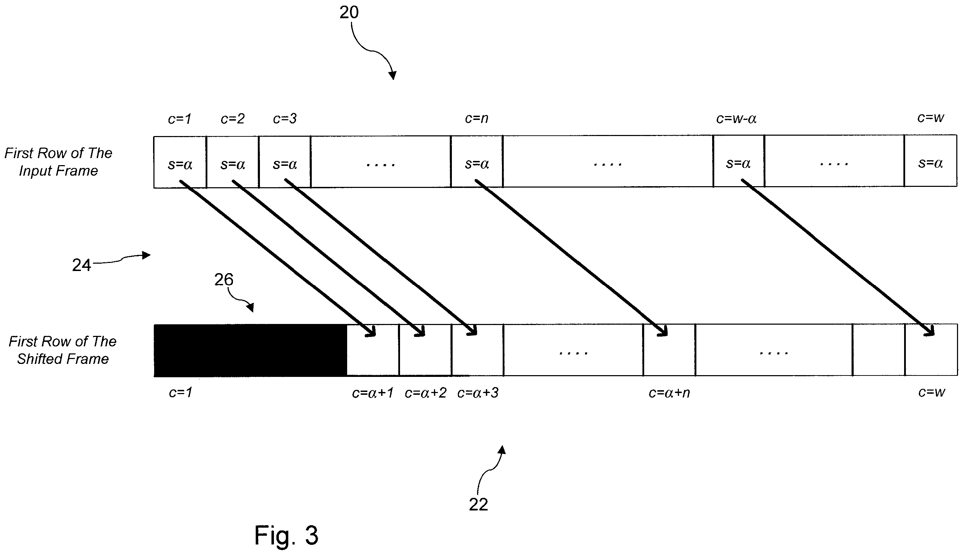

The problem of strips at the side of the shifted frames can be understood with reference to Figure 3.

Figure 3 shows a schematic representation of how the problem of black strips at the edges of a frame can arise when 3D video is generated from 2D video using a method such as that described in WO-A-90/13848. The figure illustrates a horizontal shift operation for a single row of a frame. It will be appreciated that all rows in the frame are subjected to the same shift so that the entire frame can be said to have shifted. In the figure, "$c$" and "$s$" denote column number and shift amount, respectively. "$w$" is the width of the frame and $n$ is a number between 1 and $w$. This row of pixels may be thought of as an "input row" as it is a row from an input 2D frame, and the corresponding row of shifted frame is referred to as the "output row", as it is a row from an output 3D frame.

As can be seen, pixels of the input row 20 are mapped to the pixels of the output row 22 as indicated shown by the arrows 24. When reference is made herein to a first pixel being "mapped to" another pixel, this means that the pixel value of the first pixel is assigned to the position of a second pixel.

The same shift operation is applied to all rows of the original frame. The shift amount is "$a$" which is greater than zero, so the frame is translated to the right. As the pixels are translated to right, some pixels 26 at the beginning of the output row 22 remain empty. These "missing" pixels are painted black or assigned some neutral value. In the present method linear shifting is used to find values for these missing pixels.

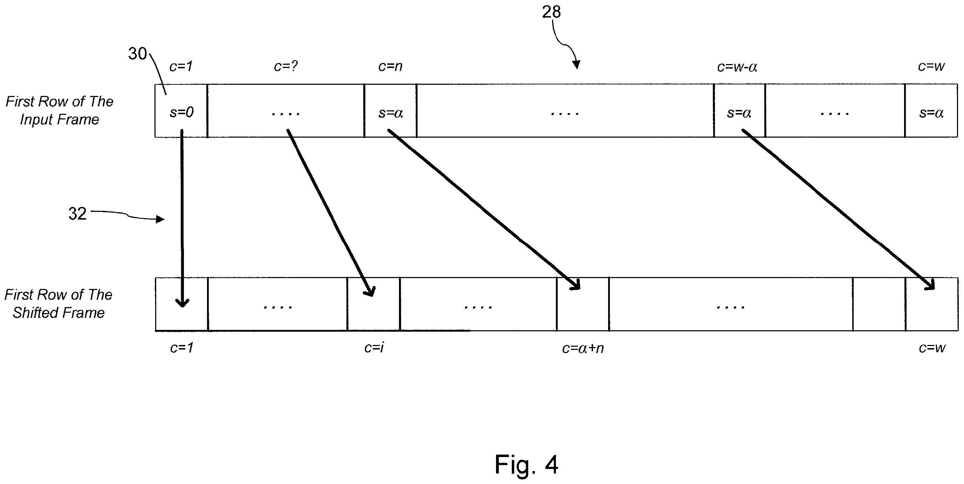

To fill the missing pixels, a linear shift operation is used. In this method, some pixels of the output row are copied directly from the pixels of the input row and some pixels of the output row are calculated as the weighted average of the pixels of the input row. Figure 4 shows an example of a horizontal linear shift operation for the first row of a frame. As mentioned above, the same shift operation is typically applied to all rows of the frame thereby providing a full frame shift.

Referring to Figure 4, an input row 28 is made up of w pixels in column positions (c) 1 to $w$. Pixels within this row are to be mapped to positions in the row of an output image. The overall shift amount or mapping required in this example to produce a frame suitable for providing (in combination with another frame) a 3D video effect is defined, as above with reference to Figure 3, as "$\alpha$" which is greater than zero. Thus, the image in the frame is translated to the right. In Figure 4, "$s$" denotes shift amount. "$n$" is a number between 1 and $w$. "$i$" is a number between 1 and "$n+\alpha$", to be described in greater detail below. The pixels of the input row are mapped to the pixels of the shifted row as shown by the arrows 32. As can be seen, the shift applied to pixels of the input row is not constant.

Pixels in the input row with column number greater than or equal to $n$ are directly mapped to the respective columns "$n+\alpha$" of the shifted output row. In other words, the shift applied to each of the pixels in a position greater than or equal to n is $\alpha$. For the first column (c=1) of the input row, the shift amount is zero. In other words, the pixel in column one of the input row is directly copied to the first column of the shifted output row. For columns between 1 and $n$, the shift amount increases from 0 to a.

In other words, the pixel at column "$i$" in the output row is copied from one column of the input row for all values of c ≥ n and for some values of c < n. for these pixels having positions c < n for which there is no direct copy or mapping available, the value in the output row is calculated as the weighted average of some pixels of the input row. One example of a means by which the weighted average may be calculated will now be described in detail. It will be appreciated though that any suitable means for calculating a weighted average may be used.

$P_{in}(i)$ denotes the pixel at column i of the input row
$P_{out}(i)$ denotes the pixel at column i of the output row

A shift amount "x" is determined as the position of the pixel in the input row that is mapped to a shifted position in the output row. In other words, $P_{out}(i)$ is defined in some way with respect to the values of the input pixels in the region between c=1 and c=n in the input row.

The shift may be defined as follows:

$$x = i\frac{n}{(\alpha + n)}$$

If x is an integer number, then

$$P_{out}(i) = P_{in}(x)$$

For example, if $\alpha$ = 30, and n=30, then the value of the pixel in the output row at position 6, will be the value of the pixel at position 6x(30/30+30), i.e. 3, in the input row. Hence the value of pixel 3 from the input row is copied to position 6 in the output row. The value of pixel 4 from the input row is copied to position 8 in the output row, and so on. For these pixels (those with positions c < n), there is therefore a linear relationship between the original position of a pixel in the input row and the position in the output row to which it is written. The constant of proportionality is defined in x above, i.e. determined by the parameters n and a.

Although a linear relationship is defined in this example, it will be understood that other relationships may be defined to determine the mapping of input pixels to output 13 pixels. Indeed, it is preferred that any mapping as determined from a polynomial family may be used, the polynomial family being defined as

$$x = n*\left( w_{-k}\left[\frac{i}{(\alpha+n)}\right]^{1/k} + \ldots + w_{-2}\left[\frac{i}{(\alpha+n)}\right]^{1/2} + w_1\frac{i}{(\alpha+n)} + w_2\left[\frac{i}{(\alpha+n)}\right]^2 + \ldots + w_m\left[\frac{i}{(\alpha+n)}\right]^m \right)$$

m s.t. $\sum_{-k}^{m} w_i = 1$, $w_0 = 0$, $w_{-1} = 0$.

Linear mapping is the specific example when $w_1$ = 1 and $w_i$ = 0 for i = 2 to m.

If x is not integer, then the following relationship is used to determine the pixel value within the output row $P_{out}(i)$

$$P_{out}(i) = d_2.P_{in}(\lfloor x \rfloor) + d_1.P_{in}(\lceil x \rceil)$$

in which

$\lfloor x \rfloor$:  greatest integer that is smaller than or equal to x;
$\lceil x \rceil$:  smallest integer that is greater than or equal to x; and,

$$d_1 = x - \lfloor x \rfloor$$

and

$$d_2 = \lceil x \rceil - x$$

The above described weighted averaging scheme takes into account two samples to produce an output value, i.e. the greatest integer that is smaller than or equal to x and smallest integer that is greater than or equal to $x$. In some examples, a weighted average can be determined that incorporates more than two samples. Also, if a frame is translated to left, then linear shift block works on the right side of the frame using the same methodology, but in the reverse direction.

Referring again to Figure 4, as can be seen, the gradient of the arrows showing the mapping of pixels from the input row to the output row varies. For pixel at c=1, the arrow is vertical, whereas for pixel c=n, the arrow has the gradient that represents the overall mapping for pixels with c>n. This represents a variation in the shift as explained above. Indeed, whilst the precise gradients are not important as these merely depend on the schematic manner in which the rows and their separation are depicted in the figure, what this does show clearly is that for pixels in the region having value of c<n, the mapping or shift is not uniform, but varies across this region.

Thus, it will be appreciated that values for all pixels in the output row are calculated in a simple and efficient manner in a way that leaves no black strips or null values in the output frame. As explained above, in one example, down-sampling may be performed so as to generate the two images that are to be used in the formation of a 3D image for reach frame within a 2D video. Preferably, no down-sampling is performed and instead the entire input frame is transformed in the manner described above.

In WO-A-98/29860 referred to above, a method is disclosed that also provides depth perception by generating two (stereo) images from a single (mono) image. However, it does this by producing two interlaced videos from one progressive video. The method is largely intended for use on CRT systems, which unlike LCDS or plasmas, provide interlaced outputs. By exploiting this property of CRTs, the two generated video streams (images) each use half of the progressive image data. In this way by driving the video in an interlaced manner spatial video resolution is halved but temporal video resolution is doubled. Seperate and decoupled operations are applied on the two halves. Much of the disclosure relates to operations such as shifting and scaling to generate depth perception.

In contrast the present method and apparatus, serves to trasform a single progressive video input to double progressive video outputs more applicable to present day LCDs, plasmas etc. In preferred embodiments of the present method, all the original image data (except that lost at boundaries due to shifting) on both generated images is used. The present method enables the pushing of the whole frame to the background or foreground, i.e. the left or right in depdnence on image configuration, and management of the problems at boundaries in an efficient and cost effective way.

Furthermore, in WO-A-98/29860, methods that leave holes are used to create depth variation. As a second step the holes are filled in some manner. The fill could be black pixels or some interpolated, interpreted data from around. In contrast to this, in the present system no holes are formed in the output image. Rather all pixels are filled in a first iteration.

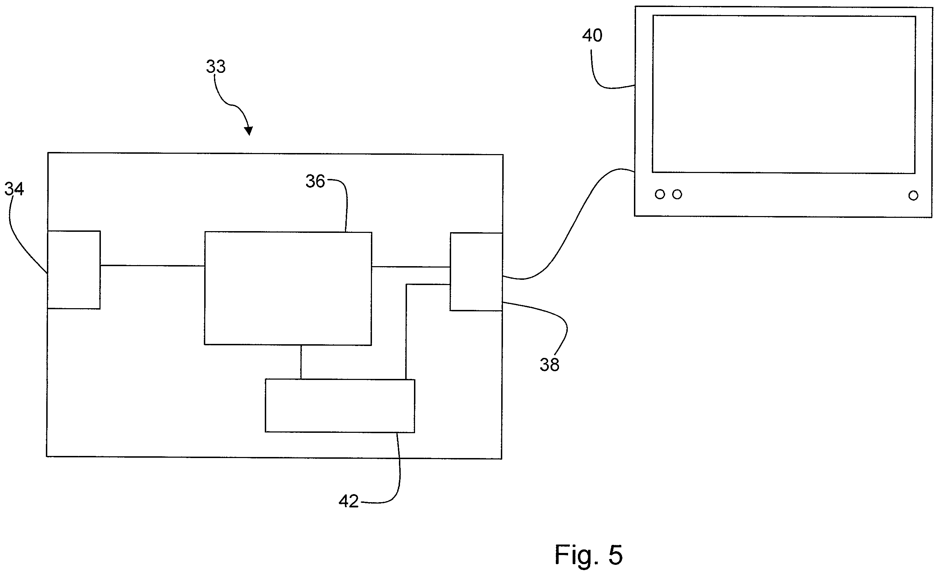

Figure 5 shows a schematic representation of a system 33 of generating 3D video from a source 2D video. The system includes an input 34 to receive a 2D video. A processor 36 receives the 2D and serves to process it as described above. An output 38 is shown coupled to a television system 40 for display of 3D video. Memory 42 may be provided as part of the system for storing the generated 3D video or the received 2D video prior to or during processing. It will be understood that any suitable processor may be used. Typically, the processor is provided as an ASIC or FPGA programmed or configured to perform the method described above. The television system may be any type of television system or monitor.

Preferably the television is a plasma or LCD television system as this type works particularly well with the image processing method described above. Furthermore, it will be appreciated that although shown as a separate system, the system 33 may be integrated into a television so that the television receives 2D video in the normal way but processes this on the fly and generates 3D video for display to a user.

**Claims**

1. A method of generating a 3D image from an input 2D image by generating at least one shifted 2D image for presentation to a user in combination with the input 2D image or another shifted 2D image derived from the input 2D image, the method comprising:

   receiving the input 2D image;
   **characterised by**:

   for each row of pixels in the input 2D image, from a selected point along the row, depending on an amount of shift required, mapping all pixels a common number of pixel positions to the left or mapping all pixels a common number of pixel positions to the right to positions in a corresponding row of pixels in the shifted 2D image; and

mapping pixels of the row in positions in the input 2D image before the selected point a variable number of pixel positions to the left or right to positions in the corresponding row of pixels in the shifted 2D image; wherein the input 2D image has a width of w pixels and the selected point is defined as n in which n < w, the amount of shift being a, such that all pixels in the input 2D image with a position greater than or equal to n are shifted to a new position in the shifted 2D image by the amount of shift $\alpha$;

wherein all pixels in the input 2D image having a position less than n are shifted to a new position in the shifted 2D image by a variable amount of shift such that the variable amount of shift varies from 0 to $\alpha$ as the pixel position in the input 2D image varies from 1 to n-1;

wherein, for pixel positions in the corresponding row in the shifted 2D image for which there is not a direct mapping from a single pixel in the row in the input 2D image, the pixel value is determined on a weighted average of pixels in the row in the input 2D image;

wherein the variable mapping is determined in dependence on a linear relationship between an original pixel position in the input 2D image and a mapped pixel position in the shifted 2D image and wherein the linear relationship has a constant of proportionality dependent on original pixel position.

2. A method according to claim 1, in which

$P_{in}(i)$ denotes a pixel at position *i* of the row in the input 2D image
$P_{out}(i)$ denotes a pixel at position *i* of the corresponding row in the shifted 2D image and the variable amount of shift verifies

$$x = i\frac{n}{\alpha + n}$$

if *x* is an integer number, then

$$P_{out}(i) = P_{in}(x).$$

3. A method according to claim 2, in which,

if *x* is not integer, then the following relationship is used to determine the pixel value within the corresponding row in the shifted 2D image $P_{out}(i)$

$$P_{out}(i) = d_2.P_{in}(\lfloor x \rfloor) + d_1.P_{in}(\lceil x \rceil)$$

in which

$\lfloor x \rfloor$: greatest integer that is smaller than or equal to *x*;
$\lceil x \rceil$: smallest integer that is greater than or equal to *x*; and,

$$d_1 = x - \lfloor x \rfloor$$

and

$$d_2 = \lceil x \rceil - x.$$

4. A method according to any of claims 1 to 3, in which upon receipt of the input 2D image, performing down-sampling to generate two down-sampled images for processing, each of the down-sampled images being shifted by an amount, so that the two shifted 2D images can be presented to a user.

5. A method according to any of claims 1 to 4, comprising presenting to a user the shifted 2D image in combination with the input 2D image or another shifted 2D image derived from the input 2D image, to thereby generate a 3D image.

**6.** A method of generating 3D video from 2D video, comprising for each frame of an input 2D video, generating a 3D image in accordance with the method of any one or more of claims 1 to 5.

**7.** Apparatus for generating a 3D image from an input 2D image by generating at least one shifted 2D image for presentation to a user in combination with the input 2D image or another shifted image derived from the input 2D image, the apparatus comprises a processor (36) arranged to:
receive the input 2D image
**characterized in that**

for each row of pixels in the input 2D image, from a selected point along the row, depending on an amount of shift required, to map all pixels a common number of pixel positions to the left or right to positions in a corresponding row of pixels in the shifted 2D image; and
map pixels of the row in positions in the input 2D image before the selected point a variable number of pixel positions to the left or right to positions in the corresponding row of pixels in the shifted 2D image;
wherein the input 2D image has a width of w pixels and the selected point is defined as n in which n < w, the amount of shift being a, such that the processor is arranged to shift all pixels in the input 2D image with a position greater than or equal to n to a new position in the shifted 2D image by the amount of shift $\alpha$;
wherein the processor is arranged to shift all pixels in the input 2D image having a position less than n to a new position in the shifted 2D image by a variable amount of shift such that the variable amount of shift varies from 0 to $\alpha$ as the pixel position in the input 2D image varies from 1 to n-1;
wherein, for pixel positions in the corresponding row in the shifted 2D image for which there is not a direct mapping from a single pixel in the row in the input 2D image, the processor is arranged to determine pixel value on a weighted average of pixels in the row in the input 2D image, in which the variable mapping is determined in dependence on a linear relationship between an original pixel position in the input 2D image and a mapped pixel position in the shifted 2D image and in which the linear relationship has a constant of proportionality dependent on original pixel position.

**8.** Apparatus according to claim 7, comprising a memory (42) for storing the 2D input image prior to processing and/or storing the generated 3D image prior to presentation to a user.

**9.** Apparatus according to claim 7 or 8, arranged to receive an input 2D video made up of frames each being an input 2D image and to generate a 3D video by generating a 3D image for each of the received frames.

**10.** A television set including a display for displaying video and apparatus for generating a 3D video according to claim 9.

**Patentansprüche**

**1.** Verfahren zum Erzeugen eines 3D-Bildes aus einem 2D-Eingabebild durch Erzeugen wenigstens eines verschobenen 2D-Bildes für eine Darstellung für einen Benutzer in Kombination mit dem 2D-Eingabebild oder einem anderen verschobenen 2D-Bild, das von dem 2D-Eingabebild abgeleitet wird, wobei das Verfahren Folgendes umfasst:

Empfangen des 2D-Eingabebildes;
**gekennzeichnet durch** Folgendes:

für jede Zeile von Pixeln in dem 2D-Eingabebild von einem ausgewählten Punkt entlang der Zeile abhängig von einem erforderlichen Betrag einer Verschiebung, Zuordnen aller Pixel zu einer gemeinsamen Anzahl von Pixelpositionen nach links oder Zuordnen aller Pixel zu einer gemeinsamen Anzahl von Pixelpositionen nach rechts zu Positionen in einer entsprechenden Pixelzeile in dem verschobenen 2D-Bild; und
Zuordnen von Pixeln der Zeile in Positionen in dem 2D-Eingabebild vor dem ausgewählten Punkt eine variable Anzahl von Pixelpositionen nach links oder rechts zu Positionen in der entsprechenden Pixelzeile in dem verschobenen 2D-Bild;
wobei das 2D-Eingabebild eine Breite von w Pixeln aufweist und der ausgewählte Punkt als n definiert ist, wobei n < w, wobei der Betrag der Verschiebung $\alpha$ ist, derart, dass alle Pixel in dem 2D-Eingabebild mit einer Position größer als oder gleich n um den Betrag der Verschiebung $\alpha$ zu einer neuen Position in dem verschobenen 2D-Bild verschoben werden;
wobei alle Pixel in dem 2D-Eingabebild, die eine Position kleiner als n aufweisen, zu einer neuen Position in dem verschobenen 2D-Bild um einen variablen Betrag der Verschiebung derart verschoben werden, dass der variable Betrag der Verschiebung von 0 bis $\alpha$ variiert, während die Pixelposition in dem 2D-Eingabebild von 1 bis n-1 variiert;

wobei für Pixelpositionen in der entsprechenden Zeile in dem verschobenen 2D-Bild, für die es keine direkte Zuordnung von einem einzelnen Pixel in der Zeile in dem 2D-Eingabebild gibt, der Pixelwert auf einem gewichteten Mittel von Pixeln in der Zeile in dem 2D-Eingabebild bestimmt wird;

wobei die variable Zuordnung in Abhängigkeit von einer linearen Beziehung zwischen einer ursprünglichen Pixelposition in dem 2D-Eingabebild und einer zugeordneten Pixelposition in dem verschobenen 2D-Bild bestimmt wird und wobei die lineare Beziehung eine Proportionalitätskonstante aufweist, die von der ursprünglichen Pixelposition abhängt.

2.  Verfahren nach Anspruch 1, wobei

$P_{ein}(i)$ ein Pixel an Position i der Zeile in dem 2D-Eingabebild bezeichnet
$P_{aus}(i)$ ein Pixel an Position i der entsprechenden Zeile in dem verschobenen 2D-Bild bezeichnet und der variable Betrag der Verschiebung Folgendes verifiziert:

$$x = i\,\frac{n}{\alpha + n}$$

falls x eine ganzzahlige Anzahl ist, dann

$$P_{aus}(i) = P_{ein}(x).$$

3.  Verfahren nach Anspruch 2, wobei
falls x nicht ganzzahlig ist, dann die folgende Beziehung verwendet wird, um den Pixelwert innerhalb der entsprechenden Zeile in dem verschobenen 2D-Bild zu bestimmen: $P_{aus}(i)$

$$P_{aus}(i) = \delta_2 . P_{ein}(\lfloor x \rfloor) + \delta_1 . P_{ein}(\lceil x \rceil)$$

wobei

$\lfloor x \rfloor$: größte ganze Zahl, die kleiner oder gleich x ist;
$\lceil x \rceil$: kleinste ganze Zahl, die größer oder gleich x ist; und

$$\delta_1 = x - \lfloor x \rfloor$$

und

$$\delta_2 = \lceil x \rceil - x.$$

4.  Verfahren nach einem der Ansprüche 1 bis 3, wobei bei einem Empfang des 2D-Eingabebildes eine Heruntertaktung durchgeführt wird, um zwei heruntergetaktete Bilder zum Verarbeiten zu erzeugen, wobei jedes der heruntergetakteten Bilder um einen Betrag verschoben wird, so dass die zwei verschobenen 2D-Bilder für einen Benutzer dargestellt werden können.

5.  Verfahren nach einem der Ansprüche 1 bis 4, das das Darstellen des verschobenen 2D-Bildes für einen Benutzer in Kombination mit dem 2D-Eingabebild oder einem anderen verschobenen 2D-Bild umfasst, das von dem 2D-Eingabebild abgeleitet wird, wobei dadurch ein 3D-Bild erzeugt wird.

6.  Verfahren zum Erzeugen eines 3D-Videos aus einem 2D-Video, das für jedes Einzelbild eines 2D-Eingabevideos das Erzeugen eines 3D-Bildes gemäß dem Verfahren nach einem oder mehreren der Ansprüche 1 bis 5 umfasst.

7.  Vorrichtung zum Erzeugen eines 3D-Bildes aus einem 2D-Eingabebild durch Erzeugen wenigstens eines verschobenen 2D-Bildes für die Darstellung für einen Benutzer in Kombination mit dem 2D-Eingabebild oder einem anderen verschobenen Bild, das von dem 2D-Eingabebild abgeleitet wird, wobei die Vorrichtung einen Prozessor (36) umfasst, der für Folgendes angeordnet ist:

Empfangen des 2D-Eingabebildes,
**dadurch gekennzeichnet, dass** für jede Pixelzeile in dem 2D-Eingabebild von einem ausgewählten Punkt entlang der Zeile abhängig von einem erforderlichen Betrag der Verschiebung, um alle Pixel eine gemeinsame Anzahl von Pixelpositionen nach links oder rechts zu Positionen in einer entsprechenden Pixelzeile in dem verschobenen 2D-Bild zuzuordnen; und

Zuordnen von Pixeln der Zeile in Positionen in dem 2D-Eingabebild vor dem ausgewählten Punkt eine variable Anzahl von Pixelpositionen nach links oder rechts zu Positionen in der entsprechenden Pixelzeile in dem verschobenen 2D-Bild;

wobei das 2D-Eingabebild eine Breite von w Pixeln aufweist und der ausgewählte Punkt als n definiert ist, wobei n < w, wobei der Betrag der Verschiebung $\alpha$ ist, derart, dass der Prozessor angeordnet ist, um alle Pixel in dem 2D-Eingabebild mit einer Position, die größer als oder gleich n ist, zu einer neuen Position in dem verschobenen 2D-Bild um den Betrag der Verschiebung $\alpha$ zu verschieben;

wobei der Prozessor angeordnet ist, um alle Pixel in dem 2D-Eingabebild, die eine Position aufweisen, die kleiner als n ist, zu einer neuen Position in dem verschobenen 2D-Bild um einen variablen Betrag der Verschiebung derart zu verschieben, dass der variable Betrag der Verschiebung von 0 bis $\alpha$ variiert, während die Pixelposition in dem 2D-Eingabebild von 1 bis n-1 variiert;

wobei für Pixelpositionen in der entsprechenden Zeile in dem verschobenen 2D-Bild, für die es keine direkte Zuordnung von einem einzelnen Pixel in der Zeile in dem 2D-Eingabebild gibt, der Prozessor angeordnet ist, um einen Pixelwert auf einem gewichteten Mittel von Pixeln in der Zeile in dem 2D-Eingabebild zu bestimmen, wobei die Variablenzuordnung in Abhängigkeit von einer linearen Beziehung zwischen einer ursprünglichen Pixelposition in dem 2D-Eingabebild und einer zugeordneten Pixelposition in dem verschobenen 2D-Bild bestimmt wird und wobei die lineare Beziehung eine Proportionalitätskonstante aufweist, die von der ursprünglichen Pixelposition abhängt.

8. Vorrichtung nach Anspruch 7, die einen Speicher (42) zum Speichern des 2D-Eingabebildes vor dem Verarbeiten und/oder zum Speichern des erzeugten 3D-Bildes vor der Darstellung für einen Benutzer umfasst.

9. Vorrichtung nach Anspruch 7 oder 8, die angeordnet ist, um ein 2D-Eingabevideo zu empfangen, das aus Einzelbildern besteht, die jeweils ein 2D-Eingabebild sind, und um ein 3D-Video durch Erzeugen eines 3D-Bildes für jedes der empfangenen Einzelbilder zu erzeugen.

10. Fernsehapparat, der eine Anzeige zum Anzeigen eines Videos und eine Vorrichtung zum Erzeugen eines 3D-Videos nach Anspruch 9 beinhaltet.

## Revendications

1. Procédé de génération d'une image 3D à partir d'une image 2D d'entrée en générant au moins une image 2D décalée pour une présentation à un utilisateur en combinaison avec l'image 2D d'entrée ou une autre image 2D décalée dérivée de l'image 2D d'entrée, le procédé comprenant :

la réception de l'image 2D d'entrée ;
**caractérisé par** :

pour chaque rangée de pixels dans l'image 2D d'entrée, à partir d'un point sélectionné le long de la rangée, en fonction d'une quantité de décalage requise, le mappage de tous les pixels d'un nombre commun de positions de pixels sur la gauche ou le mappage de tous les pixels d'un nombre commun de positions de pixels sur la droite à des positions dans une rangée correspondante de pixels dans l'image 2D décalée ; et le mappage de pixels de la rangée à des positions dans l'image 2D d'entrée avant le point sélectionné d'un nombre variable de positions de pixels sur la gauche ou la droite à des positions dans la rangée de pixels correspondante dans l'image 2D décalée ;
dans lequel l'image 2D d'entrée a une largeur de pixels w et le point sélectionné est défini comme n dans lequel n < w, la quantité de décalage étant a, de telle sorte que tous les pixels dans l'image 2D d'entrée avec une position supérieure ou égale à n sont décalés vers une nouvelle position dans l'image 2D décalée par la quantité de décalage $\alpha$ ;

dans lequel tous les pixels dans l'image 2D d'entrée ayant une position inférieure à n sont décalés vers une nouvelle position dans l'image 2D décalée par une quantité variable de décalage de telle sorte que la quantité variable de décalage varie de 0 à $\alpha$ tandis que la position de pixel dans l'image 2D d'entrée varie de 1 à n - 1 ;

dans lequel, pour les positions de pixels dans la rangée correspondante dans l'image 2D décalée pour lesquelles il n'y a pas de mappage direct à partir d'un seul pixel dans la rangée dans l'image 2D d'entrée, la valeur de pixel est déterminée sur une moyenne pondérée de pixels dans la rangée dans l'image 2D d'entrée ;

dans lequel le mappage variable est déterminé en fonction d'une relation linéaire entre une position de pixel d'origine dans l'image 2D d'entrée et une position de pixel mappé dans l'image 2D décalée et dans lequel la relation linéaire a une constante de proportionnalité dépendant de la position de pixel d'origine.

2. Procédé selon la revendication 1, dans lequel

$P_{in}(i)$ désigne un pixel à la position $i$ de la rangée dans l'image 2D d'entrée

$P_{out}(i)$ désigne un pixel à la position $i$ de la rangée correspondante dans l'image 2D décalée et la quantité variable de décalage vérifie

$$x \;=\; i\,\frac{n}{\alpha + n}$$

si $x$ est un nombre entier, alors

$$P_{out}(i) = P_{in}(x).$$

3. Procédé selon la revendication 2, dans lequel, si $x$ n'est pas un nombre entier, alors la relation suivante est utilisée pour déterminer la valeur de pixel à l'intérieur de la rangée correspondante dans l'image 2D décalée $P_{out}(i)$

$$P_{out}(i) = d_2 . P_{in}(\lfloor x \rfloor) + d_1 . P_{in}(\lceil x \rceil)$$

dans lequel

$\lfloor x \rfloor$: plus grand nombre entier inférieur ou égal à x ;
$\lceil x \rceil$: plus petit nombre entier supérieur ou égal à x ; et,

$$d_1 \;=\; x - \lfloor x \rfloor$$

et

$$d_2 = \lceil x \rceil - x.$$

4. Procédé selon l'une quelconque des revendications 1 à 3, dans lequel, lors de la réception de l'image 2D d'entrée, un sous-échantillonnage est effectué pour générer deux images sous-échantillonnées pour traitement, chacune des images sous-échantillonnées étant décalée par une quantité, de telle sorte que les deux images 2D décalées peuvent être présentées à un utilisateur.

5. Procédé selon l'une quelconque des revendications 1 à 4, comprenant la présentation à un utilisateur de l'image 2D décalée en combinaison avec l'image 2D d'entrée ou une autre image 2D décalée dérivée de l'image 2D d'entrée, pour générer ainsi une image 3D.

6. Procédé de génération d'une vidéo 3D à partir d'une vidéo 2D, comprenant pour chaque trame d'une vidéo 2D d'entrée, la génération d'une image 3D selon le procédé de l'une quelconque ou de plusieurs des revendications 1 à 5.

7. Appareil pour générer une image 3D à partir d'une image 2D d'entrée en générant au moins une image 2D décalée pour une présentation à un utilisateur en combinaison avec l'image 2D d'entrée ou une autre image décalée dérivée de l'image 2D d'entrée, l'appareil comprenant un processeur (36) agencé pour :

recevoir l'image 2D d'entrée, **caractérisé en ce que** pour chaque rangée de pixels dans l'image 2D d'entrée, à partir d'un point sélectionné le long de la rangée, en fonction d'une quantité de décalage requise, pour mapper tous les pixels d'un nombre commun de positions de pixels sur la gauche ou la droite à des positions dans une rangée correspondante de pixels dans l'image 2D décalée ; et

mapper des pixels de la rangée à des positions dans l'image 2D d'entrée avant le point sélectionné d'un nombre variable de positions de pixels sur la gauche ou la droite à des positions dans la rangée de pixels correspondante dans l'image 2D décalée ;

dans lequel l'image 2D d'entrée a une largeur de pixels w et le point sélectionné est défini comme n dans lequel n < w, la quantité de décalage étant a, de telle sorte que le processeur est agencé pour décaler tous les pixels dans l'image 2D d'entrée avec une position supérieure ou égale à n à une nouvelle position dans l'image 2D décalée par la quantité de décalage $\alpha$ ;

dans lequel le processeur est agencé pour décaler tous les pixels dans l'image 2D d'entrée ayant une position inférieure à n vers une nouvelle position dans l'image 2D décalée par une quantité variable de décalage de telle sorte que la quantité variable de décalage varie de 0 à $\alpha$ tandis que la position de pixel dans l'image 2D d'entrée varie de 1 à n - 1 ;

dans lequel, pour les positions de pixels dans la rangée correspondante dans l'image 2D décalée pour lesquelles il n'y a pas de mappage direct à partir d'un seul pixel dans la rangée dans l'image 2D d'entrée, le processeur est agencé pour déterminer la valeur de pixel sur une moyenne pondérée de pixels dans la rangée dans l'image 2D d'entrée, dans lequel le mappage variable est déterminé en fonction d'une relation linéaire entre une position de pixel d'origine dans l'image 2D d'entrée et une position de pixel mappé dans l'image 2D décalée et dans lequel la relation linéaire a une constante de proportionnalité dépendant de la position de pixel d'origine.

8. Appareil selon la revendication 7, comprenant une mémoire (42) pour stocker l'image d'entrée 2D avant le traitement et/ou le stockage de l'image 3D générée avant la présentation à un utilisateur.

9. Appareil selon la revendication 7 ou 8, agencé pour recevoir une vidéo 2D d'entrée constituée de trames étant chacune une image 2D d'entrée et pour générer une vidéo 3D en générant une image 3D pour chacune des trames reçues.

10. Téléviseur comportant un affichage pour afficher une vidéo et un appareil pour générer une vidéo 3D selon la revendication 9.

Fig. 1

Fig. 2

2D Input Frame → Subsampling by 2 in horizontal direction (10)

Left Eye Frame (12) → Side by Side Frame Packing (16)

Right Eye Frame (14) → Side by Side Frame Packing

Side by Side Frame Packing → Linear Shifting → 3D Output Frame

20

c=1    c=2    c=3                          c=n                              c=w-α                    c=w

**First Row of The Input Frame**

| s=α | s=α | s=α | . . . . | s=α | . . . . | s=α | . . . . | s=α |

24

26

**First Row of The Shifted Frame**

c=1                          c=α+1   c=α+2   c=α+3              c=α+n                          c=w

22

## Fig. 3

EP 2 509 328 B1

Fig. 4

EP 2 509 328 B1

Fig. 5

## REFERENCES CITED IN THE DESCRIPTION

**Patent documents cited in the description**

- WO 9013848 A
- WO 9829860 A
- US 5739844 A
- US 5682437 A
- US 20100021141 A
- US 6031564 A
- US 6314211 A
- US 5796373 A
- US 7064895 A
- EP 2306744 A
- US 6590573 B

**Non-patent literature cited in the description**

- *Defining Image Resolution and Image Dimensions, http://blog.phpkemist.com/2007/08/05/defining-image-resolution-and-image-dimensions*